# EUROPÄISCHE PATENTSCHRIFT

(11) **EP 1 920 188 B1**
(45) Veröffentlichungstag und Bekanntmachung des Hinweises auf die Patenterteilung: **27.09.2017**
(21) Anmeldenummer: 06793002.4
(22) Anmeldetag: 25.08.2006
(51) Int. Cl.: F21S 8/10, F21S 8/12, F21W 101/10, F21Y 115/10, F21Y 105/10

(54) **SCHEINWERFER FÜR FAHRZEUGE**
HEADLIGHT FOR VEHICLES
PHARE DE VEHICULE A MOTEUR

(30) Priorität: 31.08.2005 DE 102005041234
(43) Veröffentlichungstag der Anmeldung: 14.05.2008
(73) Patentinhaber: Hella KGaA Hueck & Co., 59552 Lippstadt (DE)
(72) Erfinder: LÜDER, Christian, 33729 Bielefeld (DE); WÜLLER, Martin, 48231 Warendorf (DE); HAGEDORN, Susanne, 59558 Lippstadt (DE); EICHHORN, Karsten, 59329 Wadersloh (DE); DECIUS, Nikolaus, 59558 Lippstadt (DE); GÖTZ, Mirko, 59555 Lippstadt (DE)
(86) Internationale Anmeldenummer: PCT/EP2006/065665
(87) Internationale Veröffentlichungsnummer: WO 2007/025931

(56) Entgegenhaltungen:
- EP-A- 1 526 328
- WO-A-2004/088200
- DE-A1- 10 009 782
- DE-A1- 10 205 779
- DE-A1-102004 019 857
- US-A1- 2005 041 434

## Beschreibung

Die Erfindung betrifft einen Scheinwerfer für Fahrzeuge nach dem Oberbegriff des Patentanspruchs 1.
Aus der DE 100 09 782 A1 ist ein Scheinwerfer für Fahrzeuge mit einer Mehrzahl von LED-Lichtquellen bekannt, die in Form einer Matrix angeordnet sind. Der Matrix von LED-Lichtquellen ist eine als Sammellinse ausgebildete Optikeinheit vorgelagert, wobei zwischen der Matrix und der Sammellinse eine Blende angeordnet sein kann zur Erzeugung einer Hell-Dunkel-Grenze der mittels der Sammellinse abgebildeten Lichtverteilung. Dadurch, dass die einzelnen LED-Lichtquellen einzeln ansteuerbar sind, können unterschiedliche Lichtverteilungen erzeugt werden. Die Variabilität de eingesetzten LED-Lichtquellen zur Erzeugung einer Lichtverteilung ist jedoch beschränkt, da allen LED-Lichtquellen lediglich eine einzige gemeinsame Sammellinse zugeordnet ist.

Aus der DE 102 05 779 A1 ist ein Scheinwerfer für Fahrzeuge mit einer Mehrzahl von LED-Lichtquellen bekannt, bei der jeder LED-Lichtquelle eine Optikeinheit zugeordnet ist. Die Optikeinheit ist als Mikrolinsenanordnung ausgebildet und unmittelbar in der LED-Lichtquelle integriert angeordnet. Zwar können durch unterschiedliche Ansteuerung der LED-Lichtquellen unterschiedliche Lichtverteilungen erzeugt werden. Aufgrund der gleichen Abbildungscharakteristika der Optikeinheiten sind die jeweils durch die LED-Lichtquellen erzeugten Lichtflecken gleich groß ausgebildet.

Aus der EP 1 526 328 A ist ein Scheinwerfer mit einer Mehrzahl von LED-Lichtquellen bekannt. Einer ersten Gruppe von Lichtquellen ist eine erste Optikeinheit zugeordnet zur Erzeugung einer asymmetrischen Abblendlichtverteilung. Einer zweiten Gruppe von Lichtquellen ist eine zweite Optikeinheit einer anderen Abbildungscharakteristik zugeordnet zur Erzeugung einer symmetrischen breiten Lichtverteilung und einer dritten Gruppe von Lichtquellen ist eine Optikeinheit mit einer weiteren Abbildungscharakteristik zugeordnet zur Erzeugung einer weiteren Lichtverteilung. Allerdings sind den LED-Lichtquellen jeweils gesonderte Optikeinheiten vorgelagert, so dass der Bauraumaufwand relativ groß ist.

Aus der DE 10 2004 019 857 A1 ist ein Scheinwerfer für Fahrzeuge mit einer Mehrzahl von LED-Lichtquellen bekannt. Die LED-Lichtquellen sind gruppiert angeordnet, wobei den LED-Lichtquellen eine gleiche Optikeinheit vorgelagert ist zur Erzeugung von unterschiedlichen Lichtflecken im Verkehrsraum.

Aufgabe der vorliegenden Erfindung ist es, einen Scheinwerfer für Fahrzeuge mit einer Mehrzahl von LED-Lichtquellen derart weiterzubilden, dass die Bereitstellung von an die Erfordernisse des Straßenraums angepassten Lichtverteilungen auf lichttechnisch einfache und wirksame Weise verbessert wird.

Zur Lösung dieser Aufgabe weist die Erfindung die Merkmale des Patentanspruchs 1 auf.
Der besondere Vorteil der Erfindung besteht darin, dass eine Vielzahl von unterschiedlichen Lichtverteilungen mit einem begrenzten Umfang von zu Gruppen zusammengefassten LED-Lichtquellen generierbar sind. Nach der Erfindung sind den Gruppen von LED-Lichtquellen unterschiedliche Optikeinheiten mit unterschiedlichen Abbildungscharakteristika zugeordnet, so dass in Abhängigkeit von der Ansteuerung einzelner oder mehrerer LED-Lichtquellen der ersten Gruppe von LED-Lichtquellen und der zweiten Gruppe von LED-Lichtquellen oder weiterer Gruppen unterschiedliche Lichtverteilungen erzeugt werden können. Beispielsweise kann durch Kombination oder Überlagerung von Gruppen von LED-Lichtquellen eine Abblendlichtverteilung oder eine Fernlichtverteilung oder eine Kurvenlichtfunktion bzw. Markierungsfunktion sowie eine Autobahnlichtverteilung erzeugt werden. Die Erfindung macht sich zunutze, dass durch die Anwendung unterschiedlicher Abbildungscharakteristika jeweils das gleiche von den einzelnen LED-Lichtquellen ausgesandte Lichtbündel zu unterschiedlich großen Lichtflecken im Straßenraum umgewandelt wird. Hierdurch lässt sich beispielsweise eine Nivellierung von Teilbereichen einer Lichtverteilung entsprechend gesetzlicher Vorgaben erzielen. Beispielsweise können auch bestimmte Teilbereiche der Lichtverteilung punktuell optisch hervorgehoben oder ausgespart werden.

Nach einer Weiterbildung der Erfindung wird mittels einer ersten Gruppe von LED-Lichtquellen und einer ersten Optikeinheit eine erste Teillichtverteilung und mittels einer zweiten Gruppe von LED-Lichtquellen und einer zweiten Optikeinheit eine zweite Teillichtverteilung erzeugt, wobei die erste Teillichtverteilung und die zweite Teillichtverteilung einen unterschiedlichen Straßenraum erfassen. Durch Überlagerung der beiden Teillichtverteilungen ergibt sich eine resultierende Lichtverteilung, die der vorgegebenen Lichtverteilung entspricht. vorzugsweise besteht die zweite Teillichtverteilung, die bereichsweise oberhalb der ersten Teillichtverteilung angeordnet ist, aus kleineren Lichtflecken, so dass beispielsweise ein relativ lichtintensiver Teilbereich in der Nähe einer Hell-Dunkel-Grenze erzeugbar ist.

Nach einer Weiterbildung der Erfindung ist den Gruppen von LED-Lichtquellen eine Ansteuereinheit zugeordnet, die eine dynamische Verlagerung der Lichtverteilung in Lenkrichtung bei einer Kurvenfahrt ermöglicht. Dabei werden insbesondere LED-Lichtquellen einer Gruppe von LED-Lichtquellen zu bzw. abgeschaltet, so dass der Anstieg der Hell-Dunkel-Grenze in Kurvenrichtung nachgeführt wird. Vorteilhaft kann hierdurch dynamisch eine Verlagerung der Lichtverteilung erzeugt werden.

Nach einer Weiterbildung der Erfindung ist der Ansteuereinheit eine Sensoreinheit zugeordnet, mittels derer die Relativposition einer im Verkehrsraum vorliegenden Gefahrenstelle und/oder einem Verkehrsobjekt zu dem Fahrzeug detektierbar ist. Die Ansteuereinheit wirkt auf die LED-Lichtquellen derart ein, dass die Gefahrenstelle durch Ein- bzw. Zuschalten oder Dimmen von LED-Lichtquellen optisch hervorgehoben wird und für den Fahrer besser erkennbar ist. Ferner kann die Ansteuereinheit derart auf die LED-Lichtquellen einwirken, dass Verkehrsobjekte, wie beispielsweise entgegenkommende Fahrzeuge unter reduzierter Beleuchtungsstärke entblendet werden. Hierbei wird in Abhängigkeit von der Relativposition des Verkehrsobjektes zu dem Fahrzeug der zu dem Verkehrsobjekt korrespondierende Bereich der Lichtverteilung weniger stark ausgeleuchtet, so dass eine Blendung des Verkehrsobjektes vermieden werden kann.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine schematische Darstellung eines Scheinwerfers mit exemplarischen zwei Gruppen von LED-Lichtquellen und denselben zugeordneten Optikeinheiten,
- Figur 2: eine schematische Darstellung einer Lichtverteilung des Scheinwerfers, bei der die unterschiedlichen Ausleuchtbereiche der Gruppen von LED-Leuchtdioden dargestellt sind,
- Figur 3a: eine Darstellung einer ersten Teillichtverteilung für Abblendlicht, die von einer ersten Gruppen von LED-Lichtquellen erzeugt wird,
- Figur 3b: eine Darstellung einer zweiten Teillichtverteilung für Abblendlicht, die von einer zweiten Gruppen von LED-Lichtquellen erzeugt wird,
- Figur 3c: eine Darstellung einer resultierenden Lichtverteilung für Abblendlicht, die von beiden Gruppen von LED-Lichtquellen gemäß Figur 3a und Figur 3b erzeugt wird,
- Figur 4: eine Darstellung einer resultierenden Lichtverteilung für Abblendlicht während einer Linkskurvenfahrt des Fahrzeugs,
- Figur 5a: eine Darstellung einer ersten Teillichtverteilung für ein Autobahnlicht der ersten Gruppe von LED-Lichtquellen,
- Figur 5b: eine Darstellung einer zweiten Teillichtverteilung für ein Autobahnlicht der zweiten Gruppe von LED-Lichtquellen,
- Figur 5c: eine Darstellung einer resultierenden Lichtverteilung für ein Autobahnlicht.

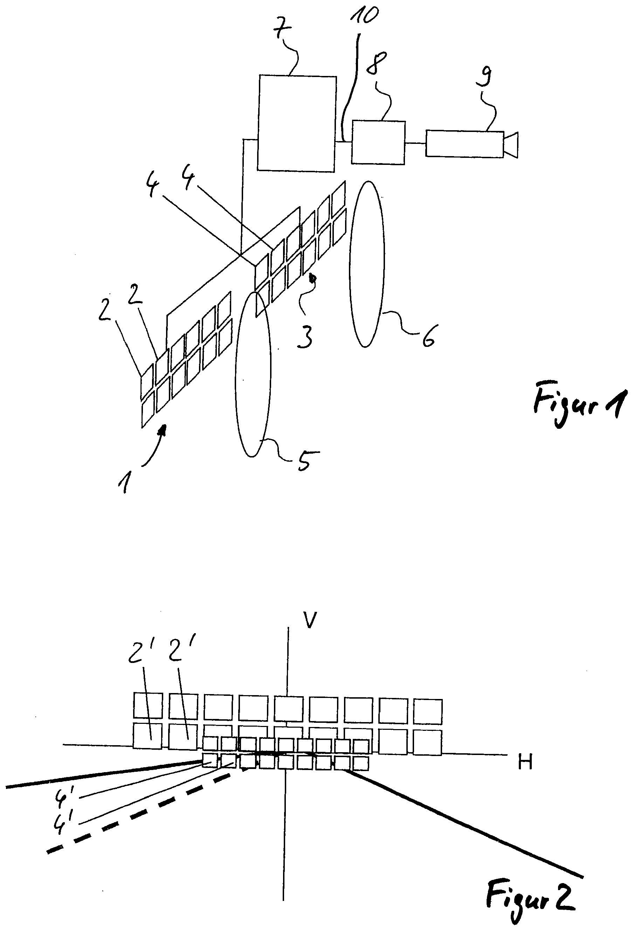

In Figur 1 ist eine schematische Ansicht eines erfindungsgemäßen Scheinwerfers für Fahrzeuge dargestellt. Der Scheinwerfer besteht zum einen aus optischen Bauteilen, die eine erste Gruppe 1 von LED-Lichtquellen 2 sowie eine zweite Gruppe 3 mit einer Mehrzahl von LED-Lichtquellen 4 umfasst. Die LED-Lichtquellen sind als LED-Chips (Licht emittierende Halbleiterdioden) ausgebildet, die zur Bildung einer Licht abstrahlenden Fläche gruppiert - das heißt in einer ersten Gruppe 1 und in einer zweiten Gruppe 3 - auf einem gemeinsamen Trägersubstrat, jeweils auf einem LED-Chip-Array, angeordnet sind.

Der ersten Gruppe 1 der LED-Lichtquellen 2 ist eine erste Optikeinheit 5 und der zweiten Gruppe 3 der LED-Lichtquellen 4 ist eine zweite Optikeinheit 6 zugeordnet, die den in der ersten Gruppe 1 bzw. in der zweiten Gruppe 3 angeordneten LED-Lichtquellen vorgelagert ist. Die einzelnen LED-Lichtquellen 2, 4 der ersten Gruppe 1 und der zweiten Gruppe 3 sind gleichartig ausgebildet. Die erste Optikeinheit 5 weist eine erste Abbildungscharakteristik auf, so dass das von den LED-Lichtquellen 2 der ersten Gruppe 1 ausgesandte Licht in Form eines relativ großen Lichtfleckes 2' im Wesentlichen oberhalb einer Horizontalen H abgebildet werden. Die zweite Optikeinheit 6 weist eine solche zweite Abbildungscharakteristik auf, dass das von den LED-Lichtquellen 4 der zweiten Gruppe 3 emittierte Licht in Form relativ kleiner Lichtflecken 4' symmetrisch verteilt oberhalb und unterhalb der Horizontalen H abgebildet werden. Die Beleuchtungsstärke der Lichtflecken 4' ist dabei größer als die Beleuchtungsstärke der Lichtflecken 2'.

Den Gruppen 1, 3 von LED-Lichtquellen 2, 4 ist als elektronisches Bauteil eine Ansteuereinheit 7 vorgelagert, mittels derer einzelne LED-Lichtquellen 2, 4 der Gruppen 1, 3 ein- oder ausgeschaltet oder dimmbar geschaltet werden können.

Eingangsseitig der Ansteuereinheit 7 ist eine Signalverarbeitungseinheit 8 sowie eingangsseitig der Signalverarbeitungseinheit 8 eine Sensoreinheit 9 vorgesehen. Die Sensoreinheit 9 detektiert während der Fahrt des Fahrzeugs Objekte im vor dem Fahrzeug liegenden Verkehrsraum und leitet ein Sensorsignal an die Signalverarbeitungseinheit 8 weiter. In der Signalverarbeitungseinheit 8 erfolgt eine Bewertung der detektierten Objekte darauf hin, ob sie eine potentielle Gefahr für den Eintritt eines unerwünschten Unfalls darstellen. Wird das detektierte Objekt als Gefahr eingestuft, wird ein entsprechendes Stellsignal 10 an die Ansteuereinheit 7 abgegeben, so dass die durch das detektierte Objekt repräsentierende Gefahrenstelle stets durch entsprechende Ansteuerung der LED-Lichtquellen 2, 4 optisch hervorgehoben wird und somit der Führer des Fahrzeugs vor der Gefahrenstelle gewarnt wird. Es erfolgt eine dynamische Ansteuerung der LED-Lichtquellen 2, 4, wobei in Abhängigkeit von der Veränderung der detektierten Dimension der Gefahrenstelle entsprechende LED-Lichtquellen 2, 4 angesteuert werden, so dass die veränderte Position der Gefahrenstelle mit einer erhöhten Beleuchtungsstärke ausgeleuchtet wird. Insbesondere kann die Beleuchtung der Gefahrenstelle dadurch verbessert werden, dass die dem Ort der Gefahrenstelle zugeordneten LED-Lichtquellen 2, 4 aufgedimmt werden. Die Gefahrenstelle kann beispielsweise als Fußgänger, Fahrradfahrer oder größere Steine vorliegen. Zusätzlich oder alternativ kann mittels der Signalverarbeitungseinheit 8 auch ein Verkehrsobjekt, wie beispielsweise ein entgegenkommendes Fahrzeug, bewertet werden, so dass der durch das Verkehrsobjekt repräsentierte Bereich mit einer reduzierten Beleuchtungsstärke ausgeleuchtet wird, so dass eine unerwünschte Blendung des Verkehrsobjektes vermieden wird. Hierdurch erfolgt eine gezielte "Entblendung" des Verkehrsobjektes, wobei der zum Verkehrsobjekt angrenzende Bereich optimal ausgeleuchtet wird.

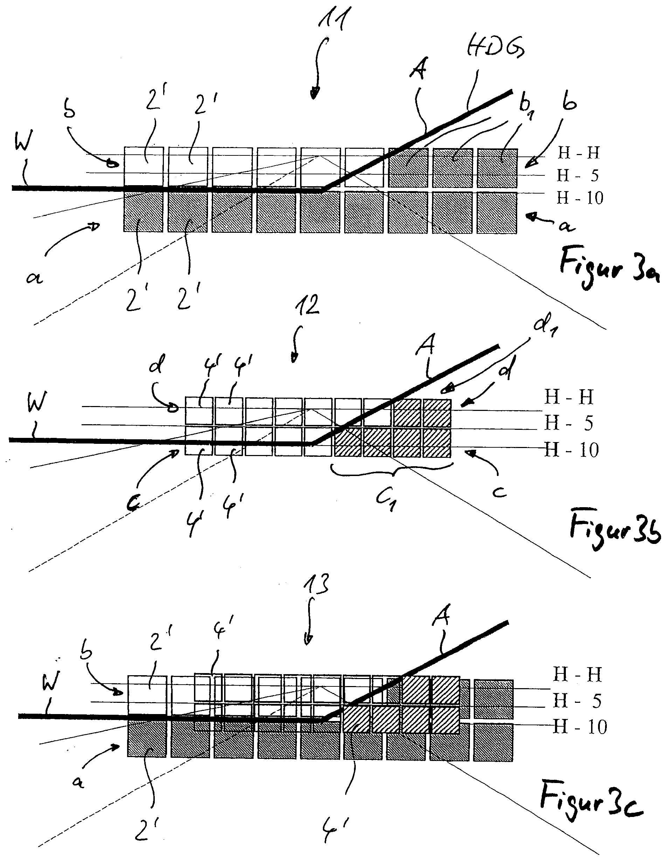

In den Figuren 3a, 3b und 3c wird die Bereitstellung einer Abblendlichtverteilung verdeutlicht. Figur 3a zeigt die ansteuerbaren Lichtflecken 2' der ersten Gruppe 1 von LED-Lichtquellen 2. Eine untere Reihe a der Lichtflecken 2' wird mittels der ersten Optikeinheit 5 derart abgebildet, dass sie im Wesentlichen unterhalb einer waagerechten Linie W der Hell-Dunkel-Grenze HDG angeordnet sind, wobei ein oberer Rand der Lichtflecken 2' die waagerechte Linie W berührt. Eine obere Reihe b der Lichtflecken 2' schließt sich unmittelbar oberhalb der unteren Reihe a an. Zur Erzeugung einer ersten Teillichtverteilung 11 für das Abblendlicht sind die LED-Lichtquellen 2 derart angesteuert, dass die untere Reihe a der Lichtflecken 2' erzeugt wird. Von der oberen Reihe b der möglichen Lichtflecken 2' werden lediglich drei rechte Lichtflecken im Bereich b₁, erzeugt, um eine asymmetrischen 15°-Anstieg A nachzubilden.

In Figur 3b ist eine zweite Teillichtverteilung 12 für Abblendlicht dargestellt, bei der eine untere Reihe c und eine obere Reihe d von Lichtflecken 4' erzeugbar sind. Die untere Reihe c der Lichtflecken 4' erstreckt sich im Wesentlichen symmetrisch zu der waagerechten Linie W. Folglich werden in der unteren Reihe c vier Lichtflecken 4' im Bereich C₁ der unteren Reihe c erzeugt. In der oberen Reihe d werden zwei Lichtflecken 4' im Bereich d₁ erzeugt zur Nachbildung des asymmetrischen Anstiegs A. Durch Überlagerung der ersten Teillichtverteilung 11 und der zweiten Teillichtverteilung 12 ergibt sich eine resultierende Abblendlichtverteilung 13 gemäß Figur 3c, wobei die erzeugten Lichtflecke 2', 4' durch Schraffierung gekennzeichnet sind.

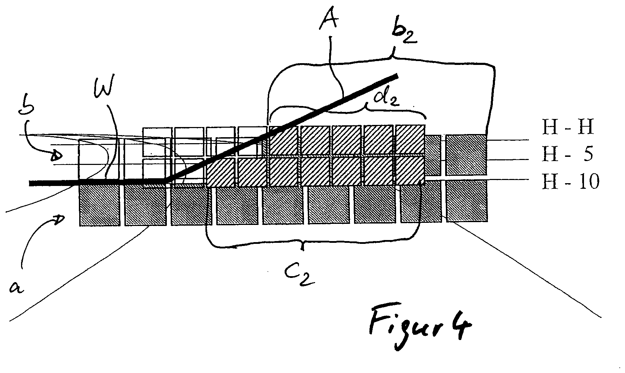

Befindet sich das Fahrzeug in einer Linkskurvenfahrt gemäß Figur 4, werden noch nicht aktivierte LED-Lichtquellen 2, 4 der ersten Gruppe 1 bzw. der zweiten Gruppe 3 nach und nach zugeschaltet, so dass der asymmetrische Anstieg A in Kurvenrichtung, das heißt nach links, wandert und eine Abblendlichtverteilung mit Kurvenlicht erzeugt. Wie aus Figur 4 ersichtlich ist, ist die Anzahl b₂ der erzeugten Lichtflecken 2' in der oberen Reihe b der ersten Teillichtverteilung 11 und die Anzahl c₂, d₂ der erzeugten Lichtflecken 4' in der unteren Reihe c und der oberen Reihe d der zweiten Teillichtverteilung 12 im Vergleich zur Geradeausfahrt gemäß Figur 3c erhöht ausgebildet.

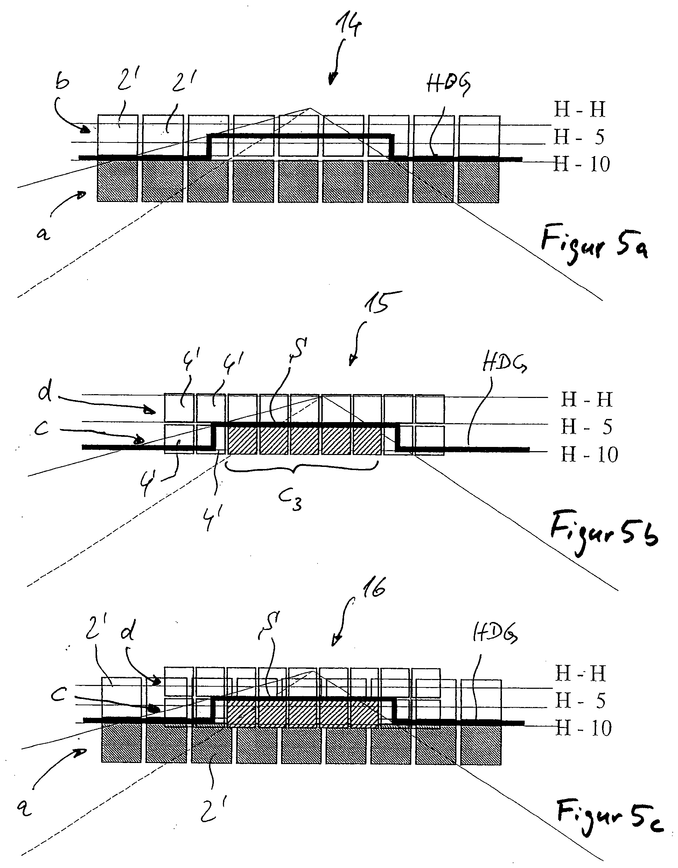

In den Figuren 5a, 5b und 5c ist die Überlagerung einer ersten Teillichtverteilung 14 und einer zweiten Teillichtverteilung 15 zu einer resultierenden Autobahnlichtverteilung 16 dargestellt. Von der ersten Gruppe 1 der LED-Lichtquellen 2 werden lediglich solche aktiviert, dass die untere Reihe a von Lichtflecken 2' erzeugt wird. Von der zweiten Gruppe 3 der LED-Lichtquellen 4 werden lediglich solche LED-Lichtquellen 4 angesteuert, dass mittlere Lichtflecken 4' der unteren Reihe c im Bereich c₃ erzeugt werden, die einen mittleren Stufenabschnitt S der Hell-Dunkel-Grenze HDG repräsentieren. Vorteilhaft kann hierdurch ein erweiterter Bereich des Verkehrsraumes ausgeleuchtet werden, wobei für den Fernbereich die relativ kleinen Lichtflecken 4' eingesetzt werden, die jedoch über eine erhöhte Beleuchtungsstärke verfügen. Hierbei macht sich die Erfindung zunutze, dass die zweite Gruppe 3 von LED-Lichtquellen 4 durch die zweite Optikeinheit 6 derart abgebildet wird, dass die entsprechenden Lichtflecken 4' der zweiten Gruppe 3 zumindest teilweise oberhalb der Lichtflecken 2' der ersten Gruppe 1 liegen, zumindest aber die untere Reihe c der Lichtflecken 4' überwiegend oberhalb der unteren Reihe a der Lichtflecken 2' liegen.

Vorteilhaft kann hierdurch eine Vielzahl von unterschiedlichen Lichtverteilungen, wie beispielsweise Fernlicht, Abblendlicht (asymmetrisch, symmetrisch), Autobahnlicht, Kurvenlicht, Markierungslicht erzeugt werden. Das Kurvenlicht bzw. das Markierungslicht kann insbesondere dynamisch erzeugt werden, wobei bei der Kurvenlichtfunktion die Ansteuerung der LED-Lichtquellen in Abhängigkeit von dem Lenkwinkel des Fahrzeugs angesteuert werden.

Beispielsweise können bei einem rechten und linken Fahrzeugscheinwerfer unterschiedliche Lichtverteilungen erzeugt werden, die einen unterschiedlichen Straßenraum ausleuchten. Alternativ können alle oder ein Teil einer Gruppe von LED-Lichtquellen Strahlung auch im infraroten Spektralbereich emittieren. Die Markierungslichtfunktion ermöglicht durch die selektive Ausleuchtung von Gefahrenstellen eine verbesserte Verkehrssicherheit.

Die erste Optikeinheit 5 und die zweite Optikeinheit 6 weisen jeweils eine Projektionsoptik auf, wobei die erste Gruppe 1 und die zweite Gruppe 3 der LED-Lichtquellen 2, 4 in einem solchen Abstand von derselben angeordnet sind, der der Brennweite der Projektionsoptik entspricht oder in der Nähe des Brennpunktes der Projektionsoptik angeordnet ist.

## Patentansprüche

1. Scheinwerfer für Fahrzeuge mit einer Mehrzahl von LED-Lichtquellen (2, 4), die in einer gemeinsamen Licht abstrahlenden Fläche zusammengefasst sind, dass mindestens einer LED-Lichtquelle eine Optikeinheit (5, 6) zugeordnet ist zur teilweisen Erzeugung einer vorgegebenen Lichtverteilung, dass einzelne oder mehrere LED-Lichtquellen (2, 4) ein- oder ausschaltbar sind, so dass die Lichtverteilung veränderbar ist, **dadurch gekennzeichnet, dass** einer ersten Gruppe (1) von LED-Lichtquellen (2) eine erste Optikeinheit (5) mit einer ersten Abbildungscharakteristik und einer zweiten Gruppe (3) von LED-Lichtquellen (4) zu der ersten Optikeinheit (5) unterschiedliche zweite Optikeinheit (6) mit einer zweiten Abbildungscharakteristik vorgelagert sind, derart, dass durch wahlweises Einschalten und Ausschalten und/oder Dimmen der LED-Lichtquellen (2) der ersten Gruppe (1) von LED-Lichtquellen (2) oder der zweiten Gruppe (3) der LED-Lichtquellen (4) eine Anzahl von unterschiedlich großen Lichtflecken (2', 4') im Verkehrsraum generierbar ist, und dass die erste Abbildungscharakteristik der ersten Optikeinheit (5) und die zweite Abbildungscharakteristik der zweiten Optikeinheit (6) derart ausgebildet sind, dass die Lichtflecken (2') der ersten Gruppe (1) von LED-Lichtquellen (2) größer sind als die Lichtflecken (4') der zweiten Gruppe (3) von LED-Lichtquellen (4) und dass die Beleuchtungsstärke der Lichtflecken (4') der zweiten Gruppe (3) von LED-Lichtquellen (4) größer ist als die Beleuchtungsstärke der Lichtflecken (2') der ersten Gruppe (1) von LED-Lichtquellen (2).

2. Scheinwerfer nach Anspruch 1, **dadurch gekennzeichnet, dass** die erste Abbildungscharakteristik der ersten Optikeinheit (5) und die zweite Abbildungscharakteristik der zweiten Optikeinheit (6) derart ausgebildet sind, dass die von den LED-Lichtquellen (2) der ersten Gruppe (1) von LED-Lichtquellen (2) erzeugte erste Teillichtverteilung (11) zumindest teilweise unterhalb einer von den LED-Lichtquellen (4) der zweiten Gruppe (3) von LED-Lichtquellen (4) erzeugten zweiten Teillichtverteilung (12) verläuft.

3. Scheinwerfer nach einem Anspruch 1 oder 2, **dadurch gekennzeichnet, dass** eine Ansteuereinheit (7) vorgesehen ist, derart, dass mehrere LED-Lichtquellen (2, 4) der ersten Gruppe (1) und der zweiten Gruppe (3) von LED-Lichtquellen (2, 4) so ein- bzw. abgeschaltet und/oder gedimmt werden, dass in Abhängigkeit von der Verkehrsraumsituation die durch Überlagerung der ersten Teillichtverteilung (11) und der zweiten Teillichtverteilung (12) resultierende Lichtverteilung (13, 16) verändert wird.

4. Scheinwerfer nach einem der Ansprüche 1 bis 3, **dadurch gekennzeichnet, dass** die Ansteuereinheit (7) die LED-Lichtquellen (2, 4) der ersten Gruppe (1) und der zweiten Gruppe (3) der LED-Lichtquellen (2, 4) derart ansteuert, dass bei einer Kurvenfahrt des Fahrzeugs zumindest teilweise die Hell-Dunkel-Grenze (HDG) in Kurvenrichtung verlagert wird.

5. Scheinwerfer nach einem der Ansprüche 1 bis 4, **dadurch gekennzeichnet, dass** der Ansteuereinheit (7) eine Sensoreinheit (9) und eine Signalverarbeitungseinheit (8) vorgelagert ist, derart, dass in Abhängigkeit von einem die Relativposition einer im Verkehrsraum vorliegenden Gefahrenstelle oder einem Verkehrsobjekt zu dem Fahrzeug repräsentierenden Stellsignal (10) die LED-Lichtquellen (2, 4) derart ansteuerbar sind, dass die Gefahrenstelle in einem vorgegebenen Zeitraum mit einer vorgegebenen erhöhten Beleuchtungsstärke und/oder das Verkehrsobjekt mit einer reduzierten Bleuchtungsstärke ausgeleuchtet wird.

6. Scheinwerfer nach einem der Ansprüche 1 bis 5, **dadurch gekennzeichnet, dass** die Ansteuereinheit (7) die erste Gruppe (1) und die zweite Gruppe (3) von LED-Lichtquellen (2, 4) mit einem solchen Ansteuersignal beaufschlagt, dass die einzelnen LED-Lichtquellen (2, 4) einschaltbar oder ausschaltbar oder dimmbar sind.

7. Scheinwerfer nach einem der Ansprüche 1 bis 6, **dadurch gekennzeichnet, dass** die erste Optikeinheit (5) und die zweite Optikeinheit (6) eine Projektionsoptik aufweisen, wobei die als Trägersubstrat ausgebildete Licht abstrahlende Fläche der ersten Gruppe (1) und der zweiten Gruppe (3) von LED-Lichtquellen (2, 4) in oder in der Nähe eines Brennpunktes der Projektionsoptik der erste Optikeinheit (5) bzw. der zweiten Optikeinheit (6) angeordnet sind.

8. Scheinwerfer nach einem der Ansprüche 1 bis 7, **dadurch gekennzeichnet, dass** die erste Optikeinheit (5) derart ausgebildet ist, dass eine Reihe (a) von Lichtflecken (2') der ersten Gruppe (1) von LED-Lichtquellen (2) unmittelbar unterhalb einer waagerechten Linie (W) einer Hell-Dunkel-Grenze (HDG) der Lichtverteilung erzeugbar sind.

9. Scheinwerfer nach einem der Ansprüche 1 bis 8, **dadurch gekennzeichnet, dass** die zweite Optikeinheit (6) derart ausgebildet ist, dass die Lichtflecken (4') der zweiten Gruppe (3) von LED-Lichtquellen (4) im Wesentlichen oberhalb der waagerechten Linie (W) der Hell-Dunkel-Grenze (HDG) der Lichtverteilung erzeugbar sind.

## Claims

1. Headlamp for Vehicles with a multitude of LED light sources (2, 4) being combined in a common light-radiating surface, wherein at least one LED light source is assigned to an optics unit (5, 6) for the partial generation of a given light distribution, wherein individual or several LED light sources (2, 4) can be switched on or off, so that the light distribution can be changed,
**characterized in that**
a first group (1) of LED light sources (2), has a first optics unit (5) with a first projection image arranged in front of it and a second group (3) of LED light sources (4) has a second optics unit (6) with a second projection image being different from the first optics unit (5) arranged in front of it, so that, by selectively switching on and off and/or dimming of the LED light sources (2) of the first group (1) of LED light sources (2) or the second group (3) of LED light sources (4), a number of light spots (2', 4') of different sizes can be generated in traffic space, and that the first projection image of the first optics unit (5) and the second projection image of the second optics unit (6) are embodied so that the light spots (2') of the first group (1) of LED light sources (2) are larger than the light spots (4') of the second group (3) of LED light sources (4) and that the illuminance of the light spots (4') of the second group (3) of LED light sources (4) is larger than the illuminance of the light spots (2') of the first group (1) of LED light sources (2).

2. Headlamp according to Claim 1, **characterized in that** the first projection image of the first optics unit (5) and the second projection image of the second optics unit (6) are embodied so that the first partial light distribution pattern (11) created by the light sources (2) of the first group (1) of LED light sources (2) lies at least partially below a second partial light distribution pattern (12) created by the LED light sources (4) of the second group (3) of LED light sources (4).

3. Headlamp according to Claim 1 or 2, **characterized in that** a control unit (7) is provided, so that several LED light sources (2, 4) of the first group (1) and of the second group (3) of LED light sources (2, 4) can be switched on and off and/ or dimmed so that the light distribution (13, 16) resulting from the superposition of the first partial light distribution pattern (11) and the second partial light distribution pattern (12) is changed according to the traffic space situation.

4. Headlamp according to one of the Claims 1 to 3, **characterized in that** the control unit (7) controls the LED light sources (2, 4) of the first group (1) and the LED light sources (2, 4) of the second group (3) so that, when the vehicle drives through a bend, the cut-off line (HDG) is shifted at least partially in the direction of the bend.

5. Headlamp according to one of the Claims 1 to 4, **characterized in that** a sensor unit (9) and a signal processing unit (8) are placed upstream of the control unit (7), so that, depending on a control signal (10) representing the position of a danger point present in traffic space or of a traffic object relative to the vehicle, the LED light sources (2, 4) are controllable in a manner, that the danger point is illuminated in a given time period with a given increase illuminance and/ or the traffic object with a reduced illuminance.

6. Headlamp according to one of the Claims 1 to 5, **characterized in that** the control unit (7) applies the first group (1) and the second group (3) of LED light sources (2, 4) with such a control signal, that the individual LED light sources (2, 4) can be switched on or off or can be dimmed.

7. Headlamp according to one of the Claims 1 to 6, **characterized in that** the first optics unit (5) and the second optics unit (6) have a projection optics, wherein the light emitting surface embodied as carrier substrate of the first group (1) and the second group (3) of LED light sources (2, 4) are arranged in or in the vicinity of a focal point of the projection optics of the first optics unit (5) resp. of the second optics unit (6).

8. Headlamp according to one of the Claims 1 to 7, **characterized in that** the first optics unit (5) is embodied in such a manner, that a series (a) of light spots (2') of the first group (1) of LED light sources (2) can be generated immediately below a horizontal line (W) of a cut-off line (HDG) of the light distribution.

9. Headlamp according to one of the Claims 1 to 8, **characterized in that** the second optics unit (6) is embodied in such a manner, that the light spots (4') of the second group (3) of LED light sources (4) can essentially be generated above the horizontal line (W) of the cut-off line (HDG) of the light distribution.

## Revendications

1. Projecteur pour véhicules avec une majorité de sources de lumière à diodes électroluminescentes (LED) (2, 4) qui sont regroupées dans une surface de diffusion lumineuse commune, qu'au moins une unité optique (5, 6) est associée à une source de lumière à LED pour générer partiellement une répartition lumineuse prédéterminée, que des sources de lumière à LED (2, 4) individuelles ou plusieurs peuvent être allumées ou éteintes de sorte que la répartition lumineuse soit modifiable,
**caractérisée en ce qu'**
une première unité optique (5) avec une première image projetée est montée en amont d'un premier groupe (1) de sources de lumière à LED (2) et une deuxième unité optique (6) différente par rapport à la première unité optique (5) avec une deuxième image projetée montée en amont d'un deuxième groupe (3) de sources de lumière à LED (4) de telle manière que l'allumage ou le déclenchement sélectif et/ou la variation de lumière des sources de lumière à LED (2) du premier groupe (1) de sources de lumière à LED (2) ou du deuxième groupe (3) de sources de lumière à LED (4) permettent de générer un nombre de points lumineux (2', 4') de tailles différentes dans l'espace de circulation et que la première image projetée de la première unité optique (5) et la deuxième image projetée de la deuxième unité optique (6) sont réalisées de telle manière que les points lumineux (2') du premier groupe (1) de sources de lumière à LED (2) soient plus grands que les points lumineux (4') du deuxième groupe (3) de sources de lumière à LED (4) et que l'intensité lumineuse des points lumineux (4') du deuxième groupe (3) de sources de lumière à LED (4) soit plus élevée que l'intensité lumineuse des points lumineux (2') du premier groupe (1) de sources de lumière à LED (2).

2. Projecteur selon la revendication 1, **caractérisée en ce que** la première image projetée de la première unité optique (5) et la deuxième image projetée de la deuxième unité optique (6) sont réalisées de telle manière que la première répartition lumineuse partielle (11) produite par les sources de lumière à LED (2) du premier groupe (1) de sources de lumière à LED (2) s'étend au moins partiellement au-dessous d'une deuxième répartition lumineuse partielle (12) produite par les sources de lumière à LED (4) du deuxième groupe (3) de sources de lumière à LED (4).

3. Projecteur selon la revendication 1 ou 2, **caractérisée en ce que** une unité de commande (7) est prévue de telle manière que plusieurs sources de lumière à LED (2, 4) du premier groupe (1) et du deuxième groupe (3) de sources de lumière à LED (2, 4) soient allumées ou éteintes et/ou variées de sorte qu'en fonction des conditions de circulation, la répartition lumineuse (13, 16) résultante de la superposition de la première répartition lumineuse partielle (11) et de la deuxième répartition lumineuse partielle (12) soit modifiée.

4. Projecteur selon l'une des revendications 1 à 3, **caractérisée en ce que** l'unité de commande (7) commande les sources de lumière à LED (2, 4) du premier groupe (1) et les sources de lumière à LED (2, 4) du deuxième groupe (3) de telle manière que lorsque le véhicule circule dans les virages la coupure clair-obscur (HDG) soit déplacée au moins partiellement dans la direction du virage.

5. Projecteur selon l'une des revendications 1 à 4, **caractérisée en ce qu'**une unité capteur (9) et une unité de traitement de signal (8) sont montées en amont de l'unité de commande (7) de telle manière qu'en fonction d'un signal de réglage (10) représentant la position relative d'un point noir routier présent à l'espace de circulation ou d'un objet de circulation par rapport au véhicule, les sources de lumière à LED (2, 4) puissent être commandées de sorte que le point noir routier soit éclairé pendant une période prédéterminée à une intensité lumineuse augmentée prédéterminée et/ou l'objet de circulation soit éclairé à une intensité lumineuse réduite.

6. Projecteur selon l'une des revendications 1 à 5, **caractérisée en ce que** l'unité de commande (7) alimente le premier groupe (1) et le deuxième groupe (3) de sources de lumière à LED (2, 4) avec un tel signal de commande que les sources de lumière à LED (2, 4) individuelles peuvent être allumées ou éteintes ou variée.

7. Projecteur selon l'une des revendications 1 à 6, **caractérisée en ce que** la première unité optique (5) et la deuxième unité optique (6) présentent une optique de projection, la surface de diffusion lumineuse réalisée en tant que substrat porteur du premier groupe (1) et du deuxième groupe (3) de sources de lumière à LED (2, 4) est disposée au ou près d'un foyer de l'optique de projection de la première unité optique (5) ou bien de la deuxième unité optique (6)

8. Projecteur selon l'une des revendications 1 à 7, **caractérisée en ce que** la première unité optique (5) est réalisée de telle manière qu'une série (a) de points lumineux (2') du premier groupe (1) de sources de lumière à LED (2) puisse être générée juste au-dessous d'une ligne horizontale (W) d'une coupure clair-obscur (HDG) de la répartition lumineuse.

9. Projecteur selon l'une des revendications 1 à 8, **caractérisée en ce que** la deuxième unité optique (6) est réalisée de telle manière que les points lumineux (4') du deuxième groupe (3) de sources de lumière à LED (4) puissent être générés essentiellement au-dessus de la ligne horizontale (W) de la coupure clair-obscur (HDG) de la répartition lumineuse.
